# EUROPÄISCHE PATENTSCHRIFT

(11) **EP 1 213 390 B1**
(45) Veröffentlichungstag und Bekanntmachung des Hinweises auf die Patenterteilung: **09.07.2008**
(21) Anmeldenummer: 01128419.7
(22) Anmeldetag: 04.12.2001
(51) Int. Cl.: E01C 19/48, B65G 15/62, B65G 19/28, B65G 15/08

(54) **Beschickvorrichtung**
Feeding apparatus
Dispositif d'alimentation

(30) Priorität: 11.12.2000 DE 20020945 U
(43) Veröffentlichungstag der Anmeldung: 12.06.2002
(73) Patentinhaber: Joseph Vögele AG, 68146 Mannheim (DE)
(72) Erfinder: Grundl, Roland, Dipl.-Ing., 69253 Heiligkreuzsteinach (DE)
(74) Vertreter: Grünecker, Kinkeldey, Stockmair & Schwanhäusser Anwaltssozietät

(56) Entgegenhaltungen:
- DE-A- 2 628 325
- DE-A- 3 834 313
- GB-A- 1 380 573
- US-A- 265 078
- US-A- 3 047 128
- US-A- 3 545 602

## Beschreibung

Die Erfindung betrifft eine Beschickvorrichtung der im Oberbegriff des Anspruchs 1 angegebenen Art.

Bei der aus DE-A-38 34 313 bekannten Gleisschotter-Beschickvorrichtung für einen Gleitschotter-Fertiger weist der Bandfertiger ein Förderband auf, das wegen des beim Fördern mangels einer Bindung zwischen den relativ groben, losen Schotterbestandteilen zum seitlichen Verlassen des Förderbandes neigenden Schotters oberseitig Querrippen trägt und dessen Seitenrandbereiche nach oben schräg angestellt sind. Somit bildet der Bandförderer einen Muldenbandförderer mit einem Muldenband-Trogabschnitt für das Fördertrum. Üblicherweise sind derartige Förderbänder als Gummiflachgurte oder Metallgewebegurte ausgebildet. Am Abgabeende des Bandförderers kann ein seitliches Querförderband angebracht werden, um bei Bedarf auch einen Gleisschotterfertiger auf einer Parallelgleistrasse zu beschicken. Der Bandförderer ist auch dazu geeignet, haftfrendiges und/oder erstarrendes Material zu transportieren.

Der aus GB-A-13 80 573 bekannte Muldenbandförderer für empfindliches und loses Granulat- oder Pellet-Schüttgut wie Tierfutter weist einen Flachgurt auf, der an zylindrischen Umlenkwalzen flachliegend umgelenkt und zwischen den Umlenkwalzen im Fördertrum dort in eine Muldenform gebracht ist, wo eine konkave Gleit-Stützmulde vorgesehen ist. Die Gleitstützmulde enthält Durchbrüche, durch welche Druckluft zwischen die Gleitstützmulde und die Unterseite des Fördertrums eingebracht wird, um den Reibwiderstand des Fördertrums zu reduzieren und das Schüttgut schonend zu fördern.

Die aus US-A-3 047 128 bekannte Trogfördervorrichtung für Schüttgut wie Mehl, Zement, Getreide etc. enthält in der Längsmitte eines geschlossenen Trogkanals mit U-förmig gerundetem Boden eine Förderkette, an der sichelförmige Schiebeklingen stehend angebracht sind. Die Schiebeklingen werden mit geringem Abstand entlang des Bodens gezogen.

Der aus US-A-265 078 bekannte Schneckenförderer für Granulat-Schüttgut enthält in einem U-förmigen Kanal eine Förderschnecke mit Schneckenabschnitten oder Schneckenblättern, die auf einer Vierkantwelle befestigt sind.

Bei der aus DE-A-2 628 325 bekannten Beschickvorrichtung ist das Förderelement des Bandförderers ein Kratzerband mit seitlichen Ketten und dazwischen quer verlaufenden Kratzerstäben, die auf einer flachen Grundplatte laufen. Für eine hohe Durchsatzrate wird das Kratzerband breit, was das Gewicht der Beschickvorrichtung unzweckmäßig erhöht. Außerdem können im Betrieb die Kratzerketten verschmutzen, und bleibt an den Kratzerstäben hinter dem Abwurfbereich Mischgut hängen, das herabfällt und das Planum verschmutzt. Alternativ kann auch ein Trogkettenförderer oder ein Stetigförderer mit einem Metallgewebeband verwendet werden.

Bei einer aus DE-U-29 603 717 bekannten Beschickvorrichtung wird ein Gummiflachgurt verwendet, dem beiderseits hochstrebende Seitenwände zugeordnet sind, um bei moderater Gurtbreite ohne seitliche Verschmutzung eine hohe Durchsatzrate zu erzielen. Der laufende Gummiflachgurt kann an den Rändern der stehenden Seitenwände verschleißen.

Der Erfindung liegt die Aufgabe zu Grunde, eine Beschickvorrichtung der eingangs genannten Art zu schaffen, die zur Beschickung eines Straßenfertigers mit haftfreudigem und/oder erstarrendem Mischgut mit moderatem Gewicht einen hohen Durchsatz erzielen lässt und bei der Reib-Verschleißerscheinungen des Förderelements des Bandförderers vermieden werden.

Die gestellte Aufgabe wird mit den Merkmalen des Anspruchs 1 gelöst.

Die Ausbildung des Bandförderers als Muldenbandförderer löst überraschend die Probleme der bekannten Beschickvorrichtungen für Straßenfertiger, denn das zu fördernde Mischgut wird im Muldenband-Trogabschnitt durch die ansteigenden Trogwände zur Mitte verlagert, so dass Verschmutzungen in den Randbereichen des Fördertrums kaum auftreten. Da sozusagen die den Mischgutstrom konzentrierenden Seitenwände mitlaufen, treten keine oberseitigen Reib-Verschleißbereiche am Förderelement mehr auf. Dank der Konzentration des Mischguts in der Mitte des Muldenband-Trogabschnittes reicht für eine hohe Durchsatzrate ein relativ schmaler Muldenbandförderer aus, dessen Gewichtsanteil in der Beschickvorrichtung verringert wird. Das Förderelement ist ein gegebenenfalls verstärkter Gummigurt oder ein Metallgewebegurt. Die Tiefe des Muldenband-Trogabschnittes nimmt allmählich oder stufenweise zu und nimmt zum Abwurfende hin allmählich oder stufenweise wieder ab. Speziell der Gummiflachgurt kann hinter der Abwurfstelle durch einfache Abstreifvorrichtungen gesäubert werden, so dass kein angehaftetes Mischgut unkontrolliert herabfällt und das Planum verschmutzt. Außerdem können einfache Umlenktrommeln zylindrischer Form verwendet werden, von denen sich haftendes Mischgut leicht entfernen lässt. Muldenbandförderer für Schüttgüter oder Stückgüter sind zwar seit Jahrzehnten bekannt; bei Beschickvorrichtungen für haftfreudiges und/oder zum Erstarren neigendes Mischgut für Verkehrsflächen einbauende Straßenfertiger wurden diese bisher jedoch nicht für geeignet gehalten.

Entlang des Muldenband-Trogabschnittes werden mehrere Stützrollenstationen angeordnet, die jeweils eine mittlere, horizontale Stützrolle und wenigstens zwei äußere, schräg angestellte Stützrollen aufweisen. Gegebenenfalls sind sogar mehr als nur zwei äußere angestellte Stützrollen mit unterschiedlichen Anstellungen vorgesehen.

Alternativ wird das flexible Band im Fördertrum auf trogförmigen Auflagen geführt, wobei eine einstückige oder eine zusammengesetzte, vorzugsweise durchgehende, Auflage entlang des Muldenband-Trogabschnittes zweckmäßig ist. Das Mischgut wird sehr gleichförmig gefördert. Gegebenenfalls hat das Band und/oder die Auflage eine gleitfreudige und verschleißfeste Beschichtung.

Besonders zweckmäßig greift der wenigstens eine Querförderer, der das Mischgut auf den Muldenbandförderer bringt, in dem noch seichten Anfangsabschnitt des Muldenband-Trogabschnittes an jeder Seite über mindestens ca. 100 Millimeter oder mehr über den Rand hinweg, so dass das Mischgut vom Querförderer nicht auf den Randbereich, sondern auf die Mitte des Bandförderers gebracht wird, ehe es im Strom entlang des Muldenband-Trogabschnittes in der Mitte sogar noch stärker konzentriert wird.

Besonders zweckmäßig werden von beiden Seiten über die Ränder des Muldenbandförderers greifende Querförderschnecken eingesetzt, die bei oder nahe an der befüllseitigen Umlenktrommel oder den dort vorgesehenen Kettenrädern der Kratzerförderketten angeordnet und außerhalb des Muldenförderbandes fliegend gelagert sind. Speziell die fliegende Lagerung und das Überlappen mit dem Muldenförderband gewährleisten eine zügige und unbehinderte Übergabe des Mischguts an den Muldenbandförderer.

Eine feinfühlige Dosierung des Mischguts bei der Übergabe an den Muldenbandförderer wird mit Vollflügelsegmenten aus verschleißfestem Guss, vorzugsweise Sonderguss, auf den Antriebswellen der Querförderschnecken erzielt. Außerdem arbeiten Vollflügelsegmente zügig und mit geringem Verschleiß. Im Hinblick auf kostengünstige Herstellung und einfachen Austausch der Vollflügelelemente sollten diese auf polygonalen Passflächen der Antriebswelle montiert sein. Dabei können Vierkant-, Sechskant-, oder Achtkantquerschnitte oder andere unrunde Querschnittsformen benutzt werden. Zweckmäßigerweise hat die Antriebswelle sogar einen durchgehenden Polygonquerschnitt zum Auffädeln und Drehsichem der Vollflügelsegmente.

Anhand der Zeichnungen werden Ausführungsformen des Erfindungsgegenstands erläutert. Es zeigen:
- Fig. 1: eine schematische Seitenansicht einer Beschickvorrichtung mit einem Muldenbandförderer,
- Fig. 2: eine Draufsicht zu Fig.1,
- Fig. 3: einen Querschnitt des Bandförderers der Fig.1 und 2, und
- Fig. 4: einen Querschnitt einer anderen Ausführungsform eines Bandförderers.

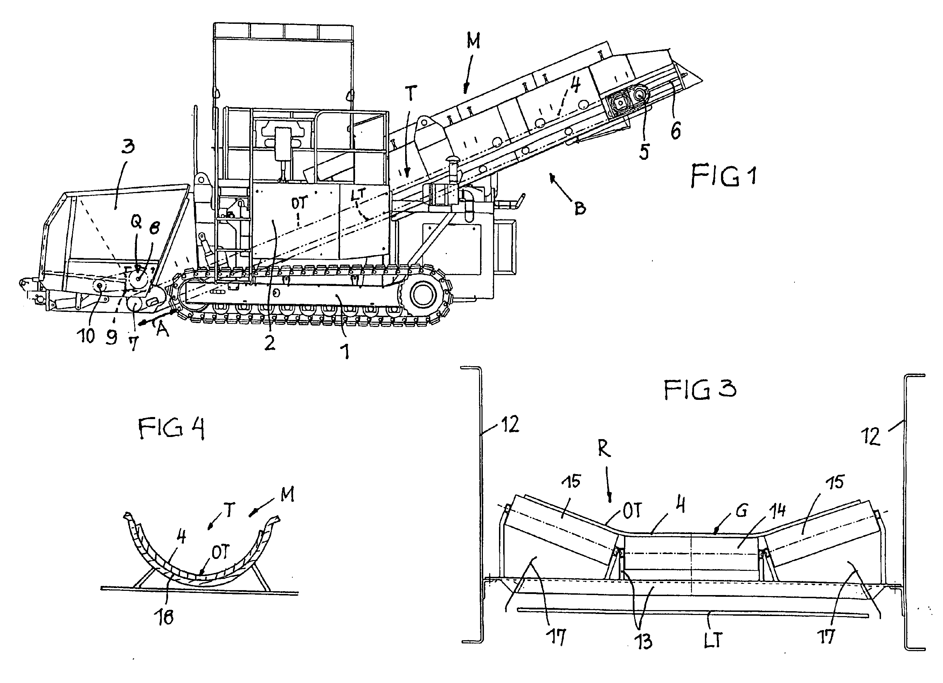

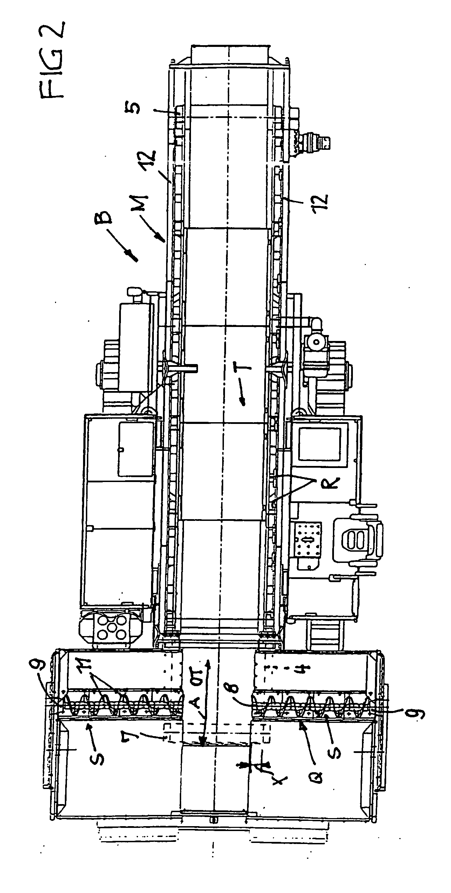

Bei der in den Fig.1 und 2 gezeigten Beschickvorrichtung B handelt es sich um einen sogenannten Beschicker zum Versorgen von Straßenfertigem mit haftfreudigem und/oder zum Erstarren neigendem Material, insbesondere heißem bituminösem Misch- oder Einbaugut z.B. für Walzasphalt. Die Beschickvorrichtung B ist beispielsweise mit einem Fahrwerk 1 an einem Unterbau 2 selbstfahrend und besitzt frontseitig einen Bunker 3 mit beispielsweise wie üblich verstellbaren Seitenwänden, der von vorne oder oben oder seitlich mit Mischgut befüllbar ist. Im Unterbau 2 erstreckt sich ausgehend vom Grund des Bunkers 3 nach hinten oben ein Muldenbandförderer M, der im Wesentlichen in Längsrichtung orientiert ist, gegebenenfalls angehoben oder abgesenkt und auch seitlich verschwenkt werden kann. Der Muldenbandförderer M enthält ein endloses, bandförmiges Förderelement 4, das über untere und obere Umlenktrommeln 7, 5 gelegt ist. Die obere Umlenktrommel 5 kann als Antriebstrommel fungieren und wird beispielsweise durch eine Spannvorrichtung 6 beaufschlagt. Im Bunker 3 sind zwei Querförderer Q angeordnet, zwischen denen mittig ein Abstand vorgesehen ist, und die nahe bei der Umlenktrommel 7 oder in Laufrichtung des Förderelementes 4 knapp dahinter Mischgut auf den Muldenbandförderer M bringen.

Die Querförderer Q sind zweckmäßigerweise von Wannen untergriffene Querförderschnecken S mit getrennten Antriebswellen 8, deren jede in einer außenliegenden Lagerung 9 fliegend abgestützt ist. Die Querförderschnecken S werden von einem Antrieb C in Drehung versetzt und sind aus aus verschleißfestem Guss hergestellte Vollflügelsegmenten 11 aufgebaut, die formschlüssig und gegebenenfalls abnehmbar auf den Antriebswellen 8 sitzen.

Jede Querförderschnecke S überlappt den Muldenbandförderer M in Querrichtung mit einem Mass x von ca. mindestens 100 Millimeter. Das Fördertrum OT wird auf mehreren Rollenstationen R entlang eines Muldenband-Trogabschnittes T abgestützt und geführt, innerhalb dessen die Außenränder des Förderelementes 4 (Fig.3) schräg nach oben angestellt sind.

In jeder Rollenstation R ist wenigstens eine mittlere, in etwa horizontale Stützrolle 14 drehbar auf einem Unterbau 13 abgestützt. Angrenzend an die mittlere Stützrolle 14 sind mindestens zwei schräg nach oben angestellte äußere Stützrollen 15 vorgesehen. Die Tiefe des Muldenband-Trogabschnitts T nimmt in einem Anfangsabschnitt A (mit Tiefe Null) von der Umlenktrommel 7 ausgehend allmählich zu und dann zur Umlenktrommel 5 wieder allmählich ab. An der Umlenktrommel 5 liegt das Förderelement 4 flach, so dass dort Abstreifvorrichtungen anhaftendes Mischgut abstreifen und mit dem abgeworfenen Mischgut herabfallen lassen. Die Abstreifvorrichtungen sind nicht näher hervorgehoben. Das Leertrum LT hängt frei durch oder wird auf Abstützungen geführt. Zweckmäßigerweise sind zum Schutz des Leertrums LT Abweiser 17 vorgesehen. Dies können Abweisebleche sein, die zwischen den Rollenstationen R montiert sind. Das Förderelement 4 ist ein flexibler Gummiflachgurt G oder ein flexibler Metallgewebegurt.

Bei der alternativen Ausführungsform in Fig.4 wird der Gummiflachgurt, der gegebenenfalls Verstärkungen enthält (oder ein Metallgewebegurt), entlang des Muldenband-Trogabschnittes T auf wannenförmigen oder gerundeten Auflagen 18 abgestützt. Zweckmäßigerweise sind entweder mehrere solcher Auflagen mit Zwischenabständen vorgesehen, oder eine aus Einzelabschnitten zusammengesetzte oder einstückig durchgehende Auflage 18. Gegebenfalls ist das Förderelement 4 und/oder die Auflage 18 mit einer gleitfreudigen Beschichtung, z.B. mit Teflon, versehen.

## Patentansprüche

1. Beschickvorrichtung (B) geeignet zum Beschicken von Straßenfertigern mit haftfreudigem und/oder erstarrendem Verkehrsflächen-Mischgut, mit wenigstens einem im Wesentlichen längs orientierten Bandförderer (F) und wenigstens einem dem Bandförderer zuliefernden Querförderer (Q), wobei der Bandförderer (F) als Muldenbandförderer (M) mit wenigstens einem Muldenband-Trogabschnitt (T) für das Fördertrum (OT) des Förderbands ausgebildet ist und das Förderband (4) ein Gummiflach- oder Metallgewebe-Gurt ist, **dadurch gekennzeichnet, dass** die Tiefe des Muldenband-Trogabschnitts (T) ab einer zumindest im Wesentlichen zylindrischen, befüllseitigen Umlenktrommel (7) über einen Anfangsabschnitt (A) allmählich oder stufenweise zunimmt und zu einer abgabeseitigen und zumindest im Wesentlichen zylindrischen Umlenktrommel (5) in einem Endabschnitt allmählich oder stufenweise wieder abnimmt.

2. Beschickvorrichtung nach Anspruch 1, **dadurch gekennzeichnet, dass** im Muldenband-Trogabschnitt (T) unter dem Fördertrum (OT) Stützrollenstationen (R) jeweils mit einer mittleren horizontalen Stützrolle (14) und mindestens zwei äußeren, schräg angestellten Stützrollen (15) vorgesehen sind.

3. Beschickvorrichtung nach Anspruch 1, **dadurch gekennzeichnet, dass** im Muldenband-Trogabschnitt (T) unter dem Fördertrum (OT) trogförmige Auflagen (18) vorgesehen sind, vorzugsweise eine einstückige oder eine zusammengesetzte, gegebenenfalls durchgehende, konkave Auflage (18).

4. Beschickvorrichtung nach Anspruch 1, **dadurch gekennzeichnet, dass** der Querförderer (Q) in den seichten Anfangsabschnitt (A) des Muldenband-Trogabschnitts (T) von außen hineingreift.

5. Beschickvorrichtung nach Anspruch 4, **dadurch gekennzeichnet, dass** an jeder Seite des Muldenbandförderers (M) als Querförderer (Q) eine von einer Wanne untergriffene Querförderschnecke (S) vorgesehen ist, und dass die Querförderschnecken (S) bei bzw. in Laufrichtung unmittelbar hinter der befüllseitigen Umlenktrommel (7) angeordnet und außerhalb des Muldenbandförderers (M) fliegend gelagert sind.

6. Beschickvorrichtung nach Anspruch 5, **dadurch gekennzeichnet, dass** die Querförderschnecken (S) Vollflügelsegmente (11) aus verschleißfestem Guss aufweisen, und dass die Vollflügelsegmente (11) lösbar und formschlüssig auf einer Antriebswelle (8) montiert sind, vorzugsweise auf vier-, sechs- oder achtkantigen Passabschnitten der Antriebswelle (8), die, vorzugsweise einen durchgehendem Polygonquerschnitt besitzt.

## Claims

1. Loading device (B) suitable for loading pavers having a traffic area mixture which is capable of adhesion and/or solidifying, the loading device having at least one substantially longitudinally oriented conveyor belt (F) and at least one cross conveyor (Q) supplying the conveyor belt, wherein the conveyor belt (F) is formed as a trough conveyor belt (M) having at least one trough belt feeder portion (T) for the feeder strand (OT) of the belt conveyor and the belt conveyor (4) is a flat rubber or metallic tissue belt, **characterised in that** the depth of the trough belt feeder portion (T) increases gradually or in stages from an at least substantially cylindrical return roller (7) on the filling side over an initial portion (A) and then decreases gradually or in stages to an at least substantially cylindrical return roller (5) on the delivery side in an end portion.

2. Loading device as claimed in Claim 1, **characterised in that** support roller stations (R) are provided in the trough belt feeder portion (T) beneath the feeder strand (OT), each of the stations having a central horizontal support roller (14) and at least two outer inclined support rollers (15).

3. Loading device as claimed in Claim 1, **characterised in that** vat-shaped supports (18) are provided in the trough belt feeder portion (T) beneath the feeder strand (OT), preferably a single-piece or an assembled, optionally continuous, concave support (18).

4. Loading device as claimed in Claim 1, **characterised in that** the cross conveyor (Q) engages into the shallow initial portion (A) of the trough belt feeder portion (T) from the outside.

5. Loading device as claimed in Claim 4, **characterised in that** on each side of the trough conveyor belt (M) a cross conveying screw (S) is provided as the cross conveyor (Q) and is engaged from beneath by a tray, and **in that** the cross conveying screws (S) are disposed close to the return roller (7) on the filling side or directly behind it in the running direction and are in an overhung position outside the trough conveyor belt (M).

6. Loading device as claimed in Claim 5, **characterised in that** the cross conveying screws (S) comprise full flank segments (11) consisting of wear-resistant cast iron, and **in that** the full flank segments (11) are mounted on a drive shaft (8) in a releasable and positive-locking manner, preferably on tetragonal, hexagonal or octagonal fitting portions of the drive shaft (8) which preferably has a continuous polygonal cross-section.

## Revendications

1. Dispositif d'alimentation (B), destiné à alimenter des finisseurs avec un produit mélangé pour surface de circulation, pouvant adhérer et/ou se solidifier, avec au moins un transporteur à bande (F), orienté sensiblement longitudinalement, et au moins un transporteur transversal (Q) alimentant le transporteur à bande, réalisé sous forme de transporteur à bande en auge (M), avec au moins un tronçon en forme d'auge (T) de bande à auge pour le brin de transport (OT) du transporteur à bande, et la bande de transporteur (4) est une courroie plate en caoutchouc ou une courroie en toile métallique, **caractérisé en ce que** la profondeur du tronçon en forme d'auge (T) de bande à auge, à partir d'un tambour de renvoi (7) situé côté remplissage, au moins sensiblement cylindrique, en passant par un tronçon initial (A), augmente progressivement ou par degrés, et dans la partie allant vers un tambour de renvoi (5) situé côté distribution et au moins sensiblement cylindrique, dans un tronçon d'extrémité, de nouveau diminue, progressivement ou par degrés.

2. Dispositif d'alimentation selon la revendication 1, **caractérisé en ce que**, dans le tronçon en forme d'auge (T) de bande à auge, au-dessous du brin de transport (OT), sont prévus des postes à rouleaux d'appui (R), comprenant chacun un rouleau d'appui médian (14) horizontal et au moins deux rouleaux d'appui extérieurs (15), orientés obliquement.

3. Dispositif d'alimentation selon la revendication 1, **caractérisé en ce que**, dans le tronçon en forme d'auge (T) de bande à auge, au-dessous du brin de transport (OT), sont prévus des reposoirs (18) en forme d'auge, de préférence un reposoir (18) concave, réalisé d'une seule pièce, ou un reposoir (18) concave réalisé par assemblage, le cas échéant continu.

4. Dispositif d'alimentation selon la revendication 1, **caractérisé en ce que** le transporteur transversal (Q) s'engage, depuis l'extérieur, dans le tronçon initial (A) peu profond du tronçon en forme d'auge (T) de bande à auge.

5. Dispositif d'alimentation selon la revendication 4, **caractérisé en ce que**, de chaque côté du transporteur à bande en auge (M) est prévu, à titre de transporteur transversal (Q), une vis de transport transversale (S) entourée par le dessous par une cuve, et **en ce que** les vis de transport transversales (S) sont disposées au tambour de renvoi (7) situé côté remplissage, ou directement derrière lui, en observant dans le sens de déplacement, et sont montés en palier de façon flottante, à l'extérieur du transporteur à bande en auge (M).

6. Dispositif d'alimentation selon la revendication 5, **caractérisé en ce que** les vis de transport transversales (S) présentent des segments d'ailettes pleins (11), en fonte résistant à l'usure, et **en ce que** les segments d'ailettes pleins (11) sont montés, de façon désolidarisable et par une liaison à ajustement de forme, sur un arbre d'entraînement (8), de préférence sur des tronçons ajustés, à quatre, six ou huit pans, de l'arbre d'entraînement (8), qui de préférence présente une section transversale polygonale continue.
